# EUROPEAN PATENT APPLICATION

(11) **EP 4 546 102 A1**
(43) Date of publication of application: **30.04.2025**
(21) Application number: 23905581.7
(22) Date of filing: 20.11.2023
(51) Int. Cl.: G06F 3/0484, A63F 13/53

(54) **VIRTUAL OBJECT PROCESSING METHOD, APPARATUS AND DEVICE, AND STORAGE MEDIUM**

(30) Priority: 23.12.2022 CN 202211668016
(71) Applicant: Beijing Zitiao Network Technology Co., Ltd., Beijing 100190 (CN)
(72) Inventor: DING, Jiangtao, Beijing 100028 (CN); WANG, Zhen, Beijing 100028 (CN); GUO, Haiyang, Beijing 100028 (CN); ZHANG, Wenshu, Beijing 100028 (CN); WANG, Shuo, Beijing 100028 (CN); WANG, Hao, Beijing 100028 (CN); LI, Chenxi, Beijing 100028 (CN); SHI, Yongbiao, Beijing 100028 (CN); SONG, Licong, Beijing 100028 (CN); GONG, Huilin, Beijing 100028 (CN); LIU, Ziyu, Beijing 100028 (CN)
(74) Representative: Williams, Michael David
(86) International application number: PCT/CN2023/132709
(87) International publication number: WO 2024/131412

(57) **Abstract**

The disclosure provides a virtual object processing method, apparatus, and device, and a storage medium. The method includes: First, a virtual scene page corresponding to a target virtual space is displayed, where user identifiers respectively corresponding to a first user and at least one second user included in the target virtual space are presented on the virtual scene page. Then, a first virtual object is determined for the first user based on the virtual scene page. A first virtual resource corresponding to the first virtual object is presented on the virtual scene page in response to receiving a preset trigger operation for the first virtual object, where the first virtual resource includes an animation and a sound effect configured for the first virtual object. In embodiments of the disclosure, presentation of the first virtual resource corresponding to the first virtual object is triggered in the target virtual space in which a plurality of persons coexist, so that an effect that the plurality of persons can interact based on the virtual object in the same virtual space is implemented, which enriches virtual object-based interaction functions, and improves the user experience.

## Description

### CROSS-REFERENCE TO RELATED APPLICATIONS

The present application is based on and claims priority to Chinese Application No. 202211668016.0, filed on December 23, 2022, the disclosure of which is incorporated herein by reference in its entirety.

### TECHNICAL FIELD

The disclosure relates to the field of data processing, and in particular, to a virtual object processing method, apparatus, and device, and a storage medium.

### BACKGROUND

With the rapid development of computer technologies, people have more and more diverse requirements for various interaction functions. A virtual object may be an object existing in a virtual scene, for example, a virtual gift, or virtual fireworks. A virtual object-based interaction function has received more and more attention.

In view of this, how to enrich virtual object-based interaction functions to meet diverse requirements of users is a technical problem to be resolved urgently.

### SUMMARY

To resolve the above technical problem, embodiments of the disclosure provide a virtual object processing method.

According to a first aspect, the disclosure provides a virtual object processing method. The method includes:
displaying a virtual scene page corresponding to a target virtual space, where user identifiers respectively corresponding to a first user and at least one second user that are included in the target virtual space are presented on the virtual scene page;
determining a first virtual object for the first user based on the virtual scene page; and
presenting a first virtual resource corresponding to the first virtual object on the virtual scene page in response to a preset trigger operation for the first virtual object, where the first virtual resource includes an animation and a sound effect configured for the first virtual object.

In an optional implementation, the method further includes:
presenting a second virtual resource corresponding to a second virtual object of the second user on the virtual scene page in response to obtaining the second virtual object, where the second virtual object is triggered on a virtual scene page corresponding to the second user, and the second virtual resource includes an animation and a sound effect configured for the second virtual object.

In an optional implementation, the method further includes:
determining a total number of taps of all users in the target virtual space in response to a tap operation acting on the virtual scene page; and
presenting a virtual resource corresponding to a preset virtual object on the virtual scene page in response to determining that the total number of taps reaches a preset number threshold, where the virtual resource corresponding to the preset virtual object includes an animation and a sound effect configured for the preset virtual object.

In an optional implementation, after presenting the third virtual resource corresponding to the third virtual object on the virtual scene page, the method further includes:
displaying a preset floating window on the virtual scene page, where the preset floating window is provided with a virtual resource obtaining entry;
displaying a multi-person chat page joined by all the users in the target virtual space, in response to a trigger operation for the virtual resource obtaining entry; and
obtaining a preset type of virtual resource based on the multi-person chat page.

In an optional implementation, the method further includes:
displaying a personal virtual space page of a third user in response to a preset trigger operation for the personal virtual space of the third user, where there is a preset association relationship between the third user and the first user;
determining a third virtual object for the third user based on the personal virtual space page; and
sending a message carrying the third virtual object to the third user in response to a virtual object sending operation triggered on the personal virtual space page.

In an optional implementation, after sending the message carrying the third virtual object to the third user, the method further includes:
displaying a resource interaction page in response to a preset first trigger operation acting on the personal virtual space page of the third user; and
presenting a third virtual resource corresponding to the third virtual object on the resource interaction page in response to a preset second trigger operation acting on the resource interaction page, where the third virtual resource includes an animation and a sound effect configured for the third virtual object.

In an optional implementation, the method further includes:
displaying a personal virtual space page of the first user in response to a preset trigger operation for the personal virtual space of the first user; and
presenting a fourth virtual resource corresponding to a fourth virtual object from a fourth user on the personal virtual space page of the first user, where there is a preset association relationship between the fourth user and the first user, and the fourth virtual resource includes an animation and a sound effect configured for the fourth virtual object.

In an optional implementation, the method further includes:
sending a message carrying the fifth virtual object to a fifth user in response to a virtual object sending operation for the fifth user triggered on the personal virtual space page of the first user, where there is a preset association relationship between the fifth user and the first user.

According to a second aspect, the disclosure provides a virtual object processing apparatus. The apparatus includes:
a first display module, configured to display a virtual scene page corresponding to a target virtual space, where user identifiers respectively corresponding to a first user and at least one second user that are included in the target virtual space are presented on the virtual scene page;
a first determination module, configured to determine a first virtual object for the first user based on the virtual scene page; and
a first presentation module, configured to present a first virtual resource corresponding to the first virtual object on the virtual scene page in response to a preset trigger operation for the first virtual object, where the first virtual resource includes an animation and a sound effect configured for the first virtual object.

According to a third aspect, the disclosure provides a computer-readable storage medium, where the computer-readable storage medium stores instructions therein, and the instructions, when run on a terminal device, cause the terminal device to implement the method described above.

According to a fourth aspect, the disclosure provides a virtual object processing device, including: a memory, a processor, and a computer program stored on the memory and capable of running on the processor. When the processor executes the computer program, the method described above is implemented.

According to a fifth aspect, the disclosure provides a computer program product. The computer program product includes a computer program/ computer instructions. The computer program/ computer instructions, when executed by a processor, causes the method described above to be implemented.

Compared to the prior art, the technical solutions provided in the embodiments of the disclosure have at least the following advantages.

Embodiments of the disclosure provide the virtual object processing method. First, a virtual scene page corresponding to a target virtual space is displayed. User identifiers respectively corresponding to a first user and at least one second user that are included in the target virtual space are presented on the virtual scene page. Then, a first virtual object is determined for the first user based on the virtual scene page. A first virtual resource corresponding to the first virtual object is presented on the virtual scene page in response to receiving a preset trigger operation for the first virtual object. The first virtual resource includes an animation and a sound effect configured for the first virtual object. In the embodiments of the disclosure, a presentation of the first virtual resource corresponding to the first virtual object is triggered in a target virtual space in which a plurality of persons coexist, so that an effect that the plurality of persons can interact based on virtual objects in a same virtual space is implemented, which enriches virtual object-based interaction functions, and improves user experience.

### BRIEF DESCRIPTION OF THE DRAWINGS

The accompanying drawings herein, which are incorporated into and form a part of the description, illustrate the embodiments in line with the disclosure and are used in conjunction with the description to explain the principles of the disclosure.

In order to more clearly illustrate the technical solutions in the embodiments of the disclosure or in the prior art, the accompanying drawings for describing the embodiments or the prior art will be briefly described below. Apparently, those of ordinary skill in the art may still derive other drawings from these accompanying drawings without creative efforts.
FIG. 1 is a flowchart of a virtual object processing method according to an embodiment of the disclosure;
FIG. 2 is a schematic diagram of a create page of a target virtual space according to an embodiment of the disclosure;
FIG. 3 is a schematic diagram of a virtual scene page according to an embodiment of the disclosure;
FIG. 4 is a schematic diagram of a virtual object generation page according to an embodiment of the disclosure;
FIG. 5 is a schematic diagram of another virtual scene page according to an embodiment of the disclosure;
FIG. 6 is a schematic diagram of a multi-person chat page according to an embodiment of the disclosure;
FIG. 7 is a schematic diagram of a personal virtual space page according to an embodiment of the disclosure;
FIG. 8 is a schematic diagram of another personal virtual space page according to an embodiment of the disclosure;
FIG. 9 is a schematic diagram of a structure of a virtual object processing apparatus according to an embodiment of the disclosure; and
FIG. 10 is a schematic diagram of a structure of a virtual object processing device according to an embodiment of the disclosure.

### DETAILED DESCRIPTION

For a clearer understanding of the above objectives, features, and advantages of the disclosure, the solutions of the disclosure will be further described below. It should be noted that the embodiments of the disclosure and features in the embodiments may be combined with each other without conflict.

Many specific details are set forth in the following description to facilitate a full understanding of the disclosure. However, the disclosure may also be implemented in other ways different from those described herein. Apparently, the embodiments in the description are only some rather than all of the embodiments of the disclosure.

To meet diverse requirements of users for virtual object-based interaction functions, embodiments of the disclosure provide the virtual object processing method. First, a virtual scene page corresponding to a target virtual space is displayed. User identifiers respectively corresponding to a first user and at least one second user that are included in the target virtual space are presented on the virtual scene page. Then, a first virtual object is determined for the first user based on the virtual scene page. A first virtual resource corresponding to the first virtual object is presented on the virtual scene page in response to receiving a preset trigger operation for the first virtual object. The first virtual resource includes an animation and a sound effect configured for the first virtual object. In the embodiments of the disclosure, a presentation of the first virtual resource corresponding to the first virtual object is triggered in a target virtual space in which a plurality of persons coexist, so that an effect that the plurality of persons can interact based on virtual objects in a same virtual space is implemented, which enriches virtual object-based interaction functions, and improves user experience.

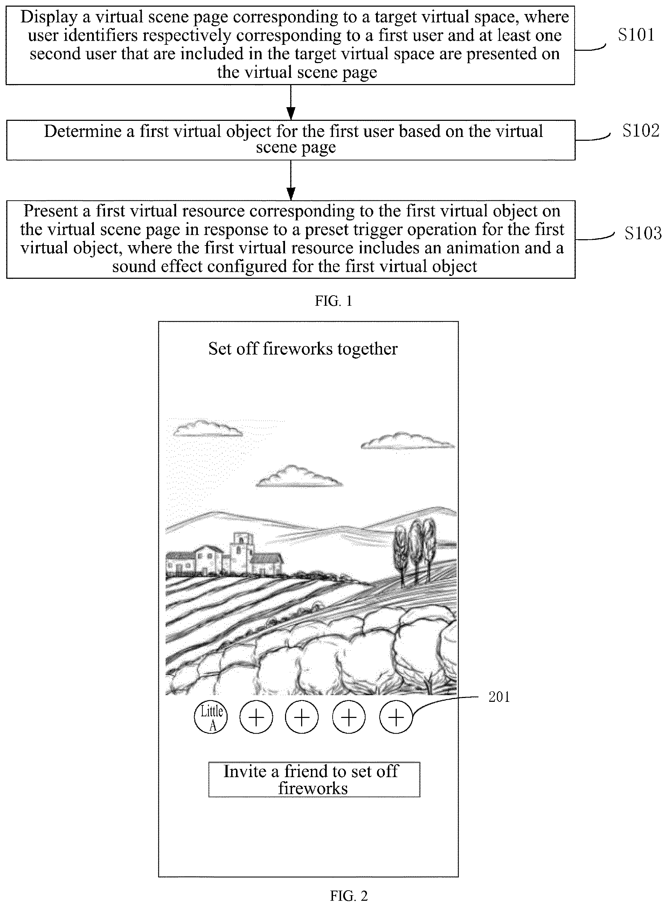

Based on this, an embodiment of the disclosure provides a virtual object processing method. FIG. 1 is a flowchart of a virtual object processing method according to an embodiment of the disclosure. The method includes the following steps.

S101: Display a virtual scene page corresponding to a target virtual space, where user identifiers respectively corresponding to a first user and at least one second user that are included in the target virtual space are presented on the virtual scene page.

In this embodiment of the disclosure, the target virtual space is a virtual space in which a plurality of users coexist. The plurality of users include the first user and the at least one second user, the first user is a current user, and the second user is a user other than the current user in the target virtual space. The user identifier presented on the virtual scene page may be a user alias, a user icon, or the like.

In an optional implementation, any user may actively initiate creation of the target virtual space. Specifically, the user creates the target virtual space after sending an invitation to another user. The user is a creator of the target virtual space. FIG. 2 is a schematic diagram of a create page of a target virtual space according to an embodiment of the disclosure. A plurality of invitation entries 201 are provided on the create page. The invitation may be sent to the other user by tapping the invitation entry 201. A user receiving the invitation may have a friend relationship or the like with the creator.

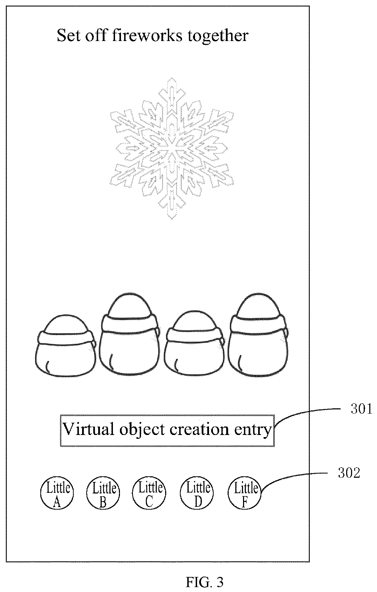

After the creation of the target virtual space is completed, the virtual scene page corresponding to the target virtual space is displayed. It is assumed that the virtual object is virtual fireworks, and the target virtual space is a space in which the plurality of persons set off fireworks for each other. FIG. 3 is a schematic diagram of a virtual scene page according to an embodiment of the disclosure. The virtual scene page displays a virtual object creation entry 301 for determining a first virtual object by the current user. User identifiers 302 such as Little A, Little B, Little C, Little D, and Little F respectively corresponding to the users in the target virtual space are further presented on the virtual scene page.

S102: Determine the first virtual object for the first user based on the virtual scene page.

In this embodiment of the disclosure, the first virtual object determined for the first user may be selected from a generated virtual object or may be created in real-time based on a virtual object create page.

In an optional implementation, a virtual object generation page is displayed in response to receiving a virtual object generation trigger operation acting on the virtual scene page. Then, a virtual object element determined based on the virtual object generation page is received, and the first virtual object is generated for the first user based on the virtual object element.

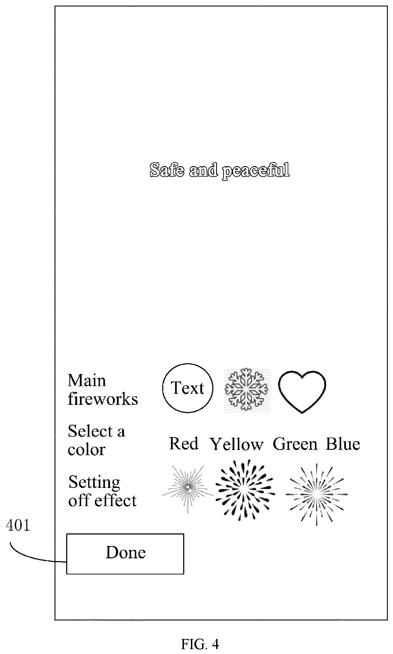

As shown in FIG. 3, after the user taps the virtual object creation entry 301, the virtual scene page is redirected to the virtual object generation page. FIG. 4 is a schematic diagram of a virtual object generation page according to an embodiment of the disclosure. A plurality of virtual object elements, including, for example, colors, shapes, animation styles, and text, are displayed on the virtual object generation page. The user may select a desired virtual object element based on requirements, to create a personalized virtual object, for example, personalized blessing fireworks.

It should be noted that, the user may enter text as one of virtual object elements of the virtual object, to create the personalized virtual object. For example, a blessing phrase is entered to create blessing fireworks, to express a blessing to another user in the target virtual space.

As shown in FIG. 4, after the user selects the desired virtual object element based on the requirements, the user may tap an "Done" control 401 provided on the virtual object generation page, to trigger generation of the first virtual object for the first user based on the virtual object element selected by the user.

S103: Present a first virtual resource corresponding to the first virtual object on the virtual scene page in response to a preset trigger operation for the first virtual object. The first virtual resource includes an animation and a sound effect configured for the first virtual object.

In an embodiment of the disclosure, after the first virtual object is determined, an interaction function may be achieved based on the first virtual object. Specifically, in response to receiving the preset trigger operation for the first virtual object, the first virtual resource corresponding to the first virtual object is presented on the virtual scene page.

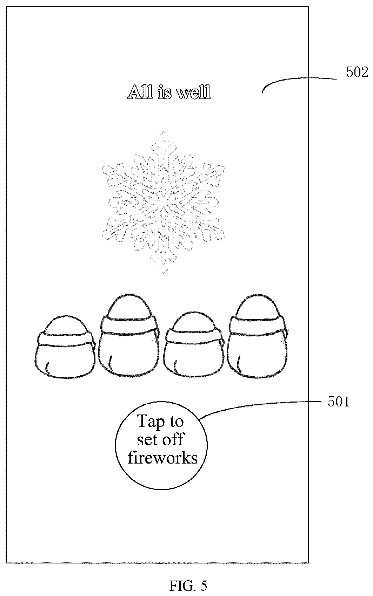

FIG. 5 is a schematic diagram of another virtual scene page according to an embodiment of the disclosure. A "Tap to set off fireworks" control 501 is provided on the virtual scene page. In response to receiving an operation of the first user tapping the control, a first virtual resource 502 corresponding to the first virtual object is presented on the virtual scene page. The first virtual resource may include an animation, a sound effect, or the like of setting off fireworks. It should be noted that a virtual scene page of another user in the same target virtual space as the first user also displays the first virtual resource corresponding to the first virtual object, so that a plurality of persons can set off fireworks for each other online.

In an optional implementation, a second virtual resource corresponding to a second virtual object of the second user in the target virtual space is presented on the virtual scene page in response to obtaining the second virtual object. The second virtual object is a virtual object determined by the second user, for example, personalized fireworks created for the second user. The second virtual object is triggered on a virtual scene page corresponding to the second user. When any user in the target virtual space sets off fireworks, a fireworks setting off effect is also presented on a virtual scene page of another user, so that a plurality of persons set off fireworks for each other in a same space.

In an optional implementation, a virtual object-based interaction function may further include, for example, a "Jointly set off fireworks" function. Specifically, a total number of taps of all users in the target virtual space is determined in response to receiving a tap operation acting on the virtual scene page. If it is determined that the total number of taps reaches a preset number threshold, a virtual resource corresponding to a preset virtual object may be presented on the virtual scene page. For example, the preset virtual object may be pre-created personalized fireworks. The users in the target virtual space jointly tap to complete unlocking of the preset virtual object, so that the virtual resource corresponding to the preset virtual object is presented.

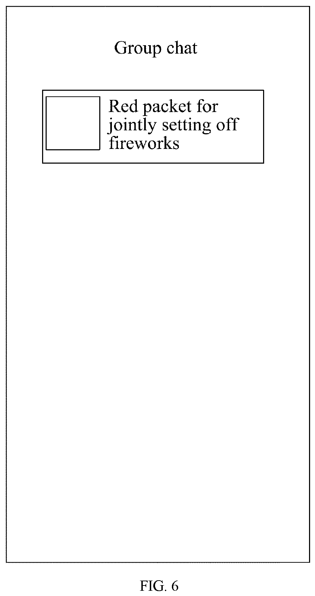

In addition, a preset floating window may be displayed on the virtual scene page after the users jointly tap to complete unlocking of the preset virtual object, to further enhance interaction enthusiasm of the users. The floating window is provided with a virtual resource obtaining entry. A multi-person chat page joined by all the users in the target virtual space is displayed in response to receiving a trigger operation for the virtual resource obtaining entry. FIG. 6 is a schematic diagram of a multi-person chat page according to an embodiment of the disclosure. A preset type of virtual resource, for example, a virtual red packet or a virtual gift, is displayed on the multi-person chat page. The user may obtain the preset type of virtual resource on the multi-person chat page, for example, to achieve an interaction effect of jointly tapping to set off fireworks to receive a red packet. In this way, enthusiasm of the user for participating interaction is improved.

In the virtual object processing method provided in this embodiment of the disclosure, first, the virtual scene page corresponding to the target virtual space is displayed. The target virtual space includes the first user and the at least one second user. Then, the first virtual object is determined for the first user based on the virtual scene page. The first virtual resource corresponding to the first virtual object is presented on the virtual scene page in response to receiving the preset trigger operation for the first virtual object. The first virtual resource includes the animation and the sound effect configured for the first virtual object. In this embodiment of the disclosure, a presentation of the first virtual resource corresponding to the first virtual object is triggered in a target virtual space in which a plurality of persons coexist, so that an effect that the plurality of persons can interact based on virtual objects in a same virtual space is implemented, which enriches virtual object-based interaction functions, and improves user experience.

On the basis of the above embodiments, the disclosure further provides a virtual object processing method. A personal virtual space of another user is entered, to realize an interaction function of sending fireworks to the user. Specifically, a personal virtual space page of a third user is displayed in response to receiving a preset trigger operation for the personal virtual space of the third user. There is a preset association relationship, for example, a friend relationship, between the third user and the first user (current user).

Then, a third virtual object is determined for the third user based on the personal virtual space page, and a message carrying the third virtual object is sent to the third user in response to receiving a virtual object sending operation triggered on the personal virtual space page, to realize a function of sending fireworks to a friend.

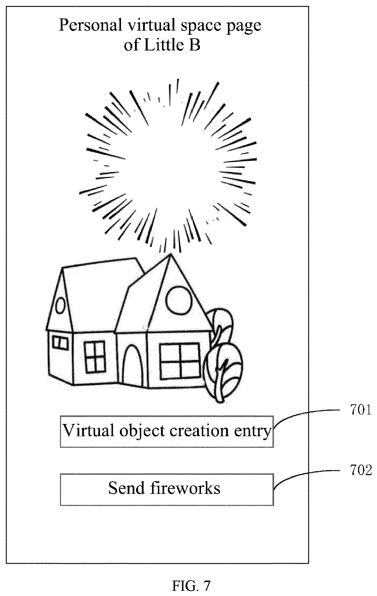

FIG. 7 is a schematic diagram of a personal virtual space page according to an embodiment of the disclosure. A virtual object creation entry 701 is provided on the personal virtual space page, and the virtual object generation page is entered in response to receiving a trigger operation of the user for the virtual object creation entry 701, as shown in FIG. 4. The personalized third virtual object is created for the third user based on the virtual object generation page. Specifically, a process of creating the third virtual object is not described herein. After the third virtual object is determine for the third user, if the virtual object sending operation triggered on the personal virtual space page is received, the message carrying the third virtual object is sent to the third user , to realize an interaction function that friends send fireworks to each other. As shown in FIG. 7, the user taps a "Send fireworks" control 702, to trigger sending the message carrying the third virtual object to the third user.

After fireworks are sent to the third user, a resource interaction page may be displayed, and the current user may trigger a presentation of the third virtual resource corresponding to the third virtual object based on the resource interaction page, to improve experience of the current user.

Specifically, the resource interaction page is displayed in response to receiving a preset first trigger operation (for example, tapping the "Send fireworks" control) on the personal virtual space page of the third user, and the third virtual resource corresponding to the third virtual object is presented on the resource interaction page in response to receiving a preset second operation (for example, tapping to set off fireworks) acting on the resource interaction page, so that the current user can send fireworks to a friend and also experience a fireworks blooming effect, and interaction experience of the user is improved.

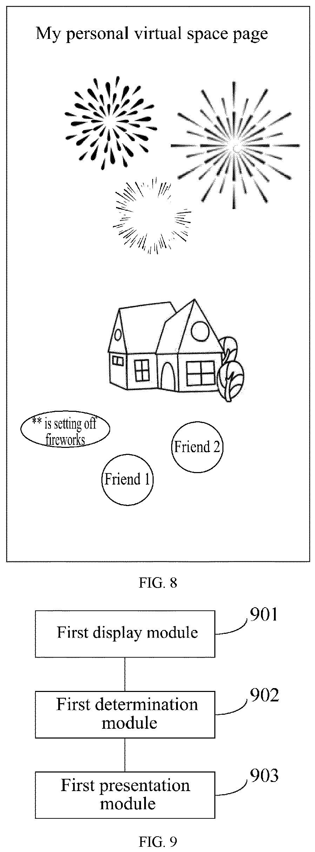

In addition, in this embodiment of the disclosure, after the first user enters a personal virtual space of the first user, the first user can view a virtual object sent by another user. Specifically, a personal virtual space page of the first user is displayed in response to receiving a preset trigger operation for the personal virtual space of the first user. FIG. 8 is a schematic diagram of another personal virtual space page according to an embodiment of the disclosure. A fourth virtual resource corresponding to a fourth virtual object from a fourth user is presented on the personal virtual space page. There is a preset association relationship, for example, a friend relationship, between the fourth user and the current user, and the fourth virtual resource includes an animation and a sound effect configured for the fourth virtual object.

In addition, names, icons, or the like of friends may be presented in a scrolling manner on a personal virtual space page of the current user, so that the current user can trigger, based on the displayed names, icons, or the like of friends, an interaction function of sending fireworks to the friend. As shown in FIG. 8, a friend 1, a friend 2, or the like is displayed on the personal virtual space page of the current user. An icon of any friend is tapped, so that sending of fireworks to the corresponding friend can be triggered.

Specifically, a message carrying a fifth virtual object is sent to a fifth user in response to receiving a virtual object sending operation triggered on the personal virtual space page of the first user for the fifth user. There is a preset association relationship, for example, a friend relationship, between the fifth user and the first user.

In the virtual object processing method provided in this embodiment of the disclosure, a blooming effect of fireworks sent by a friend can be presented based on the personal virtual space page, and in addition, an interaction function of sending fireworks to a friend can be realized, to further enrich virtual object-based interaction functions, and improve user experience.

Based on the above method embodiment, the disclosure further provides a virtual object processing apparatus. FIG. 9 is a schematic diagram of a structure of a virtual object processing apparatus according to an embodiment of the disclosure. The apparatus includes:
a first display module 901, configured to display a virtual scene page corresponding to a target virtual space, where user identifiers respectively corresponding to a first user and at least one second user that are included in the target virtual space are presented on the virtual scene page;
a first determination module 902, configured to determine a first virtual object for the first user based on the virtual scene page; and
a first presentation module 903, configured to present a first virtual resource corresponding to the first virtual object on the virtual scene page in response to a preset trigger operation for the first virtual object, where the first virtual resource includes an animation and a sound effect configured for the first virtual object.

In an optional implementation, the apparatus further includes:
a second presentation module, configured to present a second virtual resource corresponding to a second virtual object of the second user on the virtual scene page in response to obtaining the second virtual object, where the second virtual object is triggered on a virtual scene page corresponding to the second user, and the second virtual resource includes an animation and a sound effect configured for the second virtual object.

In an optional implementation, the apparatus further includes:
a second determination module, configured to determine a total number of taps of all users in the target virtual space in response to a tap operation acting on the virtual scene page; and
a third presentation module, configured to present a virtual resource corresponding to a preset virtual object on the virtual scene page in response to determining that the total number of taps reaches a preset number threshold, where the virtual resource corresponding to the preset virtual object includes an animation and a sound effect configured for the preset virtual object.

In an optional implementation, the apparatus further includes:
a second display module, configured to display a preset floating window on the virtual scene page, where the preset floating window is provided with a virtual resource obtaining entry;
a third display module, configured to display a multi-person chat page joined by all the users in the target virtual space, in response to a trigger operation for the virtual resource obtaining entry; and
an obtaining module, configured to obtain a preset type of virtual resource based on the multi-person chat page.

In an optional implementation, the apparatus further includes:
a fourth display module, configured to display a personal virtual space page of a third user in response to a preset trigger operation for the personal virtual space of the third user, where there is a preset association relationship between the third user and the first user;
a third determination module, configured to determine a third virtual object for the third user based on the personal virtual space page; and
a first sending module, configured to send a message carrying the third virtual object to the third user in response to a virtual object sending operation triggered on the personal virtual space page.

In an optional implementation, the apparatus further includes:
a fifth display module, configured to display a resource interaction page in response to a preset first trigger operation acting on the personal virtual space page of the third user; and
a fourth presentation module, configured to present a third virtual resource corresponding to the third virtual object on the resource interaction page in response to a preset second trigger operation acting on the resource interaction page, where the third virtual resource includes an animation and a sound effect configured for the third virtual object.

In an optional implementation, the apparatus further includes:
a sixth display module, configured to display a personal virtual space page of the first user in response to a preset trigger operation for the personal virtual space of the first user; and
a fifth presentation module, configured to present a fourth virtual resource corresponding to a fourth virtual object from a fourth user on the personal virtual space page of the first user, where there is a preset association relationship between the fourth user and the first user, and the fourth virtual resource includes an animation and a sound effect configured for the fourth virtual object.

In an optional implementation, the apparatus further includes:
a second sending module, configured to send a message carrying the fifth virtual object to a fifth user in response to a virtual object sending operation for the fifth user triggered on the personal virtual space page of the first user, where there is a preset association relationship between the fifth user and the first user.

According to the virtual object processing apparatus provided in this embodiment of the disclosure, first, the virtual scene page corresponding to the target virtual space is displayed. The target virtual space includes the first user and the at least one second user. Then, the first virtual object is determined for the first user based on the virtual scene page. The first virtual resource corresponding to the first virtual object is presented on the virtual scene page in response to receiving the preset trigger operation for the first virtual object. The first virtual resource includes the animation and the sound effect configured for the first virtual object. In this embodiment of the disclosure, a presentation of the first virtual resource corresponding to the first virtual object is triggered in a target virtual space in which a plurality of persons coexist, so that an effect that the plurality of persons can interact based on virtual objects in a same virtual space is implemented, which enriches virtual object-based interaction functions, and improves user experience.

In addition to the method and apparatus described above, an embodiment of the disclosure further provides a computer-readable storage medium having instructions stored therein. The instructions, when run on a terminal device, cause the terminal device to implement the virtual object processing method described in the embodiments of the disclosure.

An embodiment of the disclosure further provides a computer program product. The computer program product includes a computer program or instructions. The computer program or instructions, when executed by a processor, cause the virtual object processing method described in the embodiments of the disclosure to be implemented.

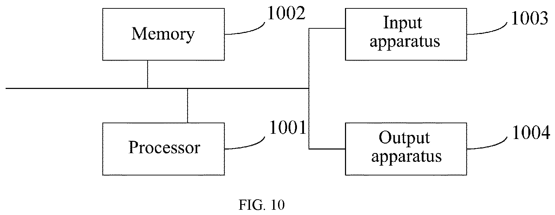

In addition, an embodiment of the disclosure further provides a virtual object processing device. As shown in FIG. 10, the device may include:
a processor 1001, a memory 1002, an input apparatus 1003, and an output apparatus 1004. There may be one or more processors 1001 in the virtual object processing device. For example, there is one processor in FIG. 10. In some embodiments of the disclosure, the processor 1001, the memory 1002, the input apparatus 1003, and the output apparatus 1004 may be connected through a bus or in another manner, for example, are connected through the bus in FIG. 10.

The memory 1002 may be configured to store a software program and a module. The processor 1001 performs various functional applications of the virtual object processing device and processes data by running the software program and the module stored in the memory 1002. The memory 1002 may mainly include a program storage area and a data storage area. The program storage area may store an operating system, an application required by at least one function, and the like. In addition, the memory 1002 may include a high-speed random access memory, and may further include a nonvolatile memory, for example, at least one magnetic disk storage device, a flash memory device, or another volatile solid-state storage device. The input apparatus 1003 may be configured to receive entered numerical or character information, and generate a signal input related to a user setting and function control of the virtual object processing device.

Specifically, in this embodiment, the processor 1001 loads an executable file corresponding to a process of one or more applications into the memory 1002 in accordance with the following instructions, and the processor 1001 runs the application stored in the memory 1002, to achieve various functions of the above virtual object processing device.

It should be noted that the relational terms such as "first" and "second" herein are only used to distinguish one entity or operation from another, and do not necessarily require or imply that any actual relationship or sequence exists between these entities or operations. Moreover, the terms "include" and "comprise", or any of their variants are intended to cover a non-exclusive inclusion, so that a process, method, article, or device that includes a list of elements not only includes those elements but also includes other elements that are not expressly listed, or further includes elements inherent to such process, method, article, or device. In the absence of more restrictions, an element defined by "including a ..." does not exclude another identical element in a process, method, article, or device that includes the element.

The above description illustrates merely specific implementations of the disclosure, so that a person skilled in the art can understand or implement the disclosure. Various modifications to these embodiments are apparent to a person skilled in the art, and the general principle defined herein may be practiced in other embodiments without departing from the spirit or scope of the disclosure. Therefore, the disclosure is not limited to the embodiments described herein but is to be accorded the broadest scope consistent with the principle and novel features disclosed herein.

## Claims

1. A virtual object processing method, **characterized in that** the method comprises:
displaying a virtual scene page corresponding to a target virtual space, wherein user identifiers respectively corresponding to a first user and at least one second user comprised in the target virtual space are presented on the virtual scene page;
determining a first virtual object for the first user based on the virtual scene page; and
presenting a first virtual resource corresponding to the first virtual object on the virtual scene page in response to a preset trigger operation for the first virtual object, wherein the first virtual resource comprises an animation and a sound effect configured for the first virtual object.

2. The method according to claim **1, characterized in that** the method further comprises:
presenting a second virtual resource corresponding to a second virtual object of the second user on the virtual scene page in response to obtaining the second virtual object, wherein the second virtual object is triggered on a virtual scene page corresponding to the second user, and the second virtual resource comprises an animation and a sound effect configured for the second virtual object.

3. The method according to claim **1, characterized in that** the method further comprises:
determining a total number of taps of all users in the target virtual space in response to a tap operation acting on the virtual scene page; and
presenting a virtual resource corresponding to a preset virtual object on the virtual scene page in response to determining that the total number of taps reaches a preset number threshold, wherein the virtual resource corresponding to the preset virtual object comprises an animation and a sound effect configured for the preset virtual object.

4. The method according to claim 3, **characterized in that** after presenting the third virtual resource corresponding to the third virtual object on the virtual scene page, the method further comprises:
displaying a preset floating window on the virtual scene page, wherein the preset floating window is provided with a virtual resource obtaining entry;
displaying a multi-person chat page joined by all the users in the target virtual space, in response to a trigger operation for the virtual resource obtaining entry; and
obtaining a preset type of virtual resource based on the multi-person chat page.

5. The method according to claim **1, characterized in that** the method further comprises:
displaying a personal virtual space page of a third user in response to a preset trigger operation for the personal virtual space of the third user, wherein there is a preset association relationship between the third user and the first user;
determining a third virtual object for the third user based on the personal virtual space page; and
sending a message carrying the third virtual object to the third user in response to a virtual object sending operation triggered on the personal virtual space page.

6. The method according to claim 5, **characterized in that** after sending the message carrying the third virtual object to the third user, the method further comprises:
displaying a resource interaction page in response to a preset first trigger operation acting on the personal virtual space page of the third user; and
presenting a third virtual resource corresponding to the third virtual object on the resource interaction page in response to a preset second trigger operation acting on the resource interaction page, wherein the third virtual resource comprises an animation and a sound effect configured for the third virtual object.

7. The method according to claim 1, **characterized in that** the method further comprises:
displaying a personal virtual space page of the first user in response to a preset trigger operation for the personal virtual space of the first user; and
presenting a fourth virtual resource corresponding to a fourth virtual object from a fourth user on the personal virtual space page of the first user, wherein there is a preset association relationship between the fourth user and the first user, and the fourth virtual resource comprises an animation and a sound effect configured for the fourth virtual object.

8. The method according to claim 7, **characterized in that** the method further comprises:
sending a message carrying the fifth virtual object to a fifth user in response to a virtual object sending operation for the fifth user triggered on the personal virtual space page of the first user, wherein there is a preset association relationship between the fifth user and the first user.

9. A virtual object processing apparatus, **characterized in that** the apparatus comprises:
a first display module configured to display a virtual scene page corresponding to a target virtual space, wherein user identifiers respectively corresponding to a first user and at least one second user comprised in the target virtual space are presented on the virtual scene page;
a first determination module configured to determine a first virtual object for the first user based on the virtual scene page; and
a first presentation module configured to present a first virtual resource corresponding to the first virtual object on the virtual scene page in response to a preset trigger operation for the first virtual object, wherein the first virtual resource comprises an animation and a sound effect configured for the first virtual object.

10. A computer-readable storage medium having instructions stored therein, **characterized in that** the instructions, when run on a terminal device, cause the terminal device to implement the method according to any one of claims 1 to 8.

11. A virtual object processing device, **characterized by** comprising: a memory, a processor, and a computer program stored on the memory and capable of running on the processor, wherein the computer program, when executed by the processor, implements the method according to any one of claims 1 to 8.

12. A computer program product, **characterized by** comprising a computer program that, when executed by a processor, implements the method according to any one of claims 1 to 8.
